# EUROPEAN PATENT SPECIFICATION

(11) **EP 3 734 040 B1**
(45) Date of publication and mention of the grant of the patent: **01.05.2024**
(21) Application number: 18895837.5
(22) Date of filing: 28.12.2018
(51) Int. Cl.: F02B 75/32, F02B 75/04, F02D 15/02, F02F 1/00, F16J 1/09, F02B 25/02

(54) **VARIABLE COMPRESSION DEVICE, AND ENGINE SYSTEM**
VORRICHTUNG MIT VARIABLER KOMPRESSION UND MOTORSYSTEM
DISPOSITIF DE COMPRESSION VARIABLE ET SYSTÈME DE MOTEUR

(30) Priority: 28.12.2017 JP 2017254343
(43) Date of publication of application: 04.11.2020
(73) Proprietor: Mitsui E&S DU Co., Ltd., Aioi-shi, Hyogo 678-0041 (JP)
(72) Inventor: MASUDA Yutaka, Tokyo 135-8710 (JP); UMEMOTO Yoshiyuki, Tokyo 101-0041 (JP)
(74) Representative: TBK
(86) International application number: PCT/JP2018/048570
(87) International publication number: WO 2019/132031

(56) References cited:
- EP-A1- 3 098 417
- EP-A2- 3 211 256
- WO-A1-2015/108178
- DE-A1-102016 208 209
- JP-A- H10 502 986
- JP-A- 2016 535 838
- JP-U- S5 887 942
- US-A1- 2016 237 889

## Description

### Technical Field

The present disclosure relates to a variable compression device according to the preamble of claim 1 and a corresponding engine system.

### Background Art

For example, Patent Document 1 discloses a large reciprocating piston combustion engine including a crosshead. The large reciprocating piston combustion engine disclosed in Patent Document 1 is a dual fuel engine that can be operated using both a liquid fuel such as heavy oil and a gaseous fuel such as natural gas. In the large reciprocating piston combustion engine disclosed in Patent Document 1, in order to cope with both a compression ratio suitable for operation using the liquid fuel and a compression ratio suitable for operation using the gaseous fuel, an adjustment mechanism (variable compression device) that is configured to change a compression ratio by moving a piston rod using oil pressure is provided in a crosshead portion.

Patent Document 2 shows a generic variable compression device having the features of the preamble of claim 1 and a corresponding engine system. Further variable compression devices and corresponding engine systems are known from Patent documents 3 to 5.

### Document of Related Art

### Patent Documents

[Patent Document 1] JP 2014 020375 A
[Patent Document 2] EP 3 098 417 A1
[Patent Document 3] EP 3 211 256 A2
[Patent Document 4] US 2016/237889 A1
[Patent Document 5] DE 10 2016 208209 A1

### Summary of Invention

### Technical Problem

In a compression adjustment device according to Patent Document 1 that changes a compression ratio as described above, a regulation member that regulates the movement of a piston rod in a direction in which a compression ratio is increased may be provided. When operation is performed at a high compression ratio, the piston rod abuts the regulation member. However, for example, when the piston rod is moved in a state where a combustion pressure is not generated inside a combustion chamber such as at the time of the start of an engine, the piston rod collides with the regulation member, and thus there is a possibility that a large force may be applied to the regulation member. On the other hand, absorbing collision energy between the regulation member and the piston rod by storing a working fluid in a space (upper space) between the regulation member and the piston rod and causing the working fluid to function as a damper can be considered. However, since a portion between the piston rod and a fluid chamber forming member is sealed by a sliding ring, it is difficult to stably supply the working fluid to the upper space.

The present disclosure is made in consideration of the above-described circumstances, and an object thereof is to stably supply a working fluid to an upper space and to prevent collision between a regulation member and a piston rod.

### Solution to Problem

The object is achieved by a variable compression device according to claim 1 and by a corresponding engine system according to claim 6. Further advantageous developments of the present invention are set out in the dependent claims.

A variable compression device according to the present invention is configured to change a compression ratio in a combustion chamber of an engine, and includes: a piston rod; a fluid chamber forming member which forms a portion of a fluid chamber, the fluid chamber being configured to move the piston rod in a direction in which a compression ratio is increased by supplying a boosted working fluid thereto; a regulation member which is configured to regulate movement of the piston rod in a direction in which a compression ratio is increased; and a sliding ring which is provided on a circumferential surface of the piston rod to be slidable with respect to the fluid chamber forming member, in which a pair of the sliding rings is provided at an interval in a vertical direction, a lower space surrounded by the fluid chamber forming member and the piston rod is formed between the pair of sliding rings, an upper space surrounded by the fluid chamber forming member, the piston rod, and the regulation member is formed above the sliding ring, the upper space being above the sliding ring on a upper side of the pair of the sliding rings, and the fluid chamber forming member includes a communication channel that is configured to guide a portion of the working fluid, which is supplied to the lower space as a coolant, to the upper space.

Preferably, the variable compression device may further include an adjustment unit which is provided in the communication channel and is configured to adjust a flow of the working fluid in the communication channel.

Preferably, the adjustment unit may be a reduced diameter portion that is configured to reduce a diameter of a portion of the communication channel.

Preferably, the adjustment unit may be a check valve.

Preferably, the fluid chamber forming member or the regulation member may include an escape channel that is configured to connect the upper space and an outside to each other.

An engine system according to the present invention includes the above variable compression device.

### Effects of Invention

According to the present invention, it is possible to supply a working fluid from a lower space to an upper space through a communication channel while bypassing a sliding ring. Therefore, it is possible to stably supply a working fluid to the upper space and to absorb collision energy between a regulation member and a piston rod by the working fluid supplied to the upper space.

### Brief Description of Drawings

Fig. 1 is a cross-sectional view of an engine system in an embodiment of the present disclosure.
Fig. 2 is a schematic cross-sectional view showing a portion of the engine system in the embodiment of the present disclosure.
Fig. 3 is a cross-sectional view showing a flow rate adjustment unit in a modification example of the engine system in the embodiment of the present disclosure.

### Description of Embodiments

Hereinafter, an embodiment of an engine system in the present disclosure will be described with reference to the accompanying drawings.

### [First embodiment]

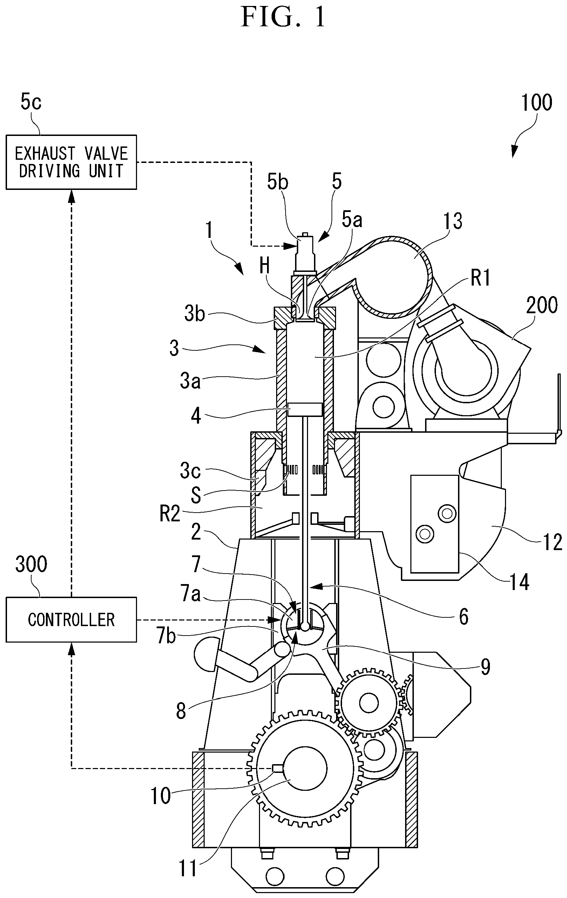

An engine system 100 of the present embodiment is mounted in a ship such as a large tanker and includes an engine 1, a supercharger 200, and a controller 300 as shown in Fig. 1. Meanwhile, in the present embodiment, the supercharger 200 is taken as an auxiliary machine and will be described as a separate body from the engine 1 (main machine). However, the supercharger 200 may be configured as a portion of the engine 1.

Fig. 1 is a longitudinal cross-sectional view along a central axis of a cylindrical cylinder liner 3a, which is to be described later, provided in the engine system 100. In Fig. 1, a side on which an exhaust valve unit 5 to be described later is provided may be referred to as an upper side, and a side on which a crankshaft 11 to be described later is provided may be referred to as a lower side. A drawing seen from a central axial direction of the cylinder liner 3a may be referred to as a plan view.

The engine 1 is a multi-cylinder uniflow scavenging diesel engine, and has a gas operation mode in which a gaseous fuel such as natural gas is burned together with a liquid fuel such as heavy oil and a diesel operation mode in which a liquid fuel such as heavy oil is burned. Meanwhile, in the gas operation mode, only a gaseous fuel may be burned. The engine 1 includes a frame 2, a cylinder portion 3, a piston 4, an exhaust valve unit 5, a piston rod 6, a crosshead 7, a hydraulic portion 8 (boosting mechanism), a connecting rod 9, a crank angle sensor 10, a crankshaft 11, a scavenging reservoir 12, an exhaust reservoir 13, and an air cooler 14. In addition, a cylinder is constituted by the cylinder portion 3, the piston 4, the exhaust valve unit 5, and the piston rod 6.

The frame 2 is a strength member that supports the entirety of the engine 1. The crosshead 7, the hydraulic portion 8, and the connecting rod 9 are accommodated in the frame 2. In addition, a crosshead pin 7a to be described later of the crosshead 7 can reciprocate inside the frame 2.

The cylinder portion 3 includes the cylindrical cylinder liner 3a, a cylinder head 3b, and a cylinder jacket 3c. The cylinder liner 3a is a cylindrical member. A sliding surface with respect to the piston 4 is formed on the inner side (inner circumferential surface) of the cylinder liner 3a. A space surrounded by the inner circumferential surface of the cylinder liner 3a and the piston 4 is a combustion chamber R1. In addition, a plurality of scavenging ports S are formed in a lower portion of the cylinder liner 3a. The scavenging ports S are openings that are arranged along the circumferential surface of the cylinder liner 3a and make a scavenging chamber R2 inside the cylinder jacket 3c and the inside of the cylinder liner 3a communicate with each other. The cylinder head 3b is a lid member provided in an upper end portion of the cylinder liner 3a. An exhaust port H is formed in the central portion of the cylinder head 3b when seen in a plan view, and is connected to the exhaust reservoir 13. In addition, the cylinder head 3b is provided with a fuel injection valve (not shown). Further, a cylinder internal pressure sensor (not shown) is provided in the vicinity of the fuel injection valve of the cylinder head 3b. The cylinder internal pressure sensor detects a pressure in the combustion chamber R1 and transmits the detected pressure to the controller 300. The cylinder jacket 3c is a cylindrical member which is provided between the frame 2 and the cylinder liner 3a and into which the lower end portion of the cylinder liner 3a is inserted. The scavenging chamber R2 is formed inside the cylinder jacket 3c. In addition, the scavenging chamber R2 of the cylinder jacket 3c is connected to the scavenging reservoir 12.

The piston 4 having a substantially columnar shape is connected to the piston rod 6 to be described later and disposed on the inner side of the cylinder liner 3a. In addition, a piston ring (not shown) is provided on the outer circumferential surface of the piston 4 to seal a gap between the piston 4 and the cylinder liner 3a. The piston 4 slides inside the cylinder liner 3a together with the piston rod 6 due to a fluctuation in pressure in the combustion chamber R1.

The exhaust valve unit 5 includes an exhaust valve 5a, an exhaust valve casing 5b, and an exhaust valve driving unit 5c. The exhaust valve 5a is provided on the inner side of the cylinder head 3b and closes the exhaust port H in the cylinder portion 3 by the exhaust valve driving unit 5c. The exhaust valve casing 5b is a cylindrical housing that accommodates an end portion of the exhaust valve 5a. The exhaust valve driving unit 5c is an actuator that moves the exhaust valve 5a in a stroke direction of the piston 4.

The piston rod 6 is an elongate member having one end connected to the piston 4 and the other end coupled to the crosshead pin 7a. An end portion (the other end portion) of the piston rod 6 is inserted into the crosshead pin 7a, and the connecting rod 9 is rotatably coupled to the crosshead pin 7a. In addition, a flange 6a formed to have a large diameter is provided at a portion of the end portion (the other end portion) of the piston rod 6 on the crosshead pin 7a side.

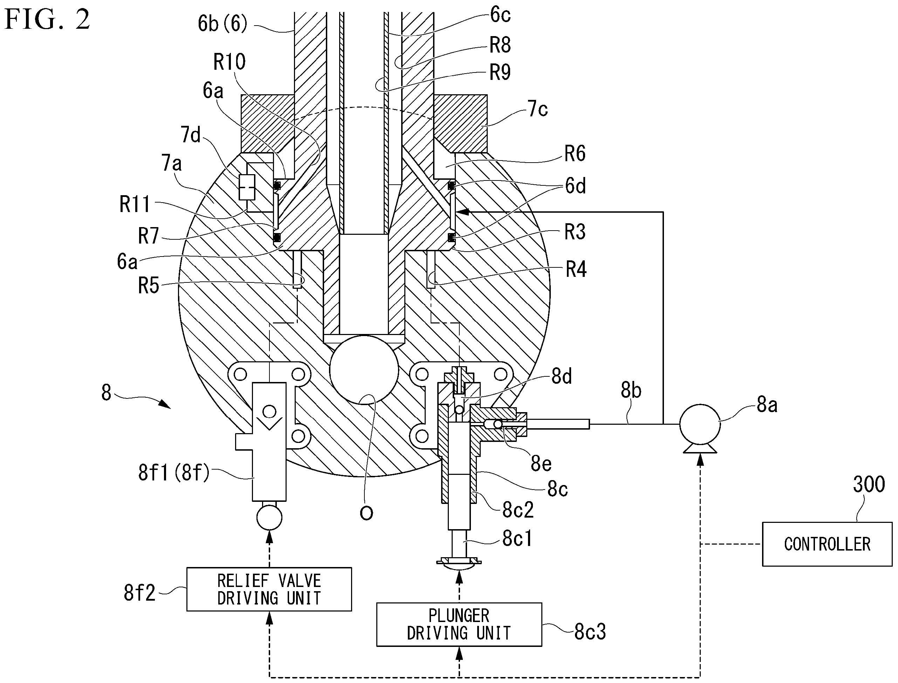

In addition, as shown in Fig. 2, the piston rod 6 has a double pipe structure which is constituted by an outer tube 6b and an inner tube 6c. The piston rod 6 includes an outer flow channel R8 formed between the outer tube 6b and the inner tube 6c. In addition, an inner flow channel R9 communicating with a hollow inside the piston 4 and extending to the lower end portion (the end portion on the crosshead 7 side) of the piston rod 6 is formed in the inner tube 6c. Further, the outer tube 6b includes an inlet flow channel R10 that connects the outer flow channel R8 and an inlet oil chamber R7 to each other. Meanwhile, hydraulic oil as a coolant is supplied to the inlet oil chamber R7, the outer flow channel R8, and the inner flow channel R9. A piston ring 6d (sliding ring) sliding inside the crosshead pin 7a to be described later is provided on the circumferential surface of the flange 6a. The piston rings 6d are provided in an upper end portion and a lower end portion of the flange 6a. In addition, an annular concave portion is formed on the circumferential surface of the flange 6a over the entire circumference of the flange 6a at a position between the two upper and lower piston rings 6d.

The crosshead 7 includes the crosshead pin 7a (fluid chamber forming member), a guide shoe 7b, a lid member 7c (regulation member), and an orifice 7d (reduced diameter portion). The crosshead pin 7a is a columnar shape member that movably connects the piston rod 6 and the connecting rod 9 to each other. A hydraulic chamber R3 (fluid chamber) to and from which hydraulic oil (working fluid) is supplied and discharged is formed in an insertion space of the crosshead pin 7a where the end portion of the piston rod 6 is inserted. An upper hydraulic chamber R6 (upper space) surrounded by the crosshead pin 7a, the lid member 7c, and the flange 6a of the piston rod 6 is formed in the crosshead pin 7a. In addition, the inlet oil chamber R7 (lower space) surrounded by the concave portion formed on the circumferential surface of the flange 6a of the piston rod 6 and the crosshead pin 7a is formed. Further, the crosshead pin 7a is provided with a communication channel R11 that connects the upper hydraulic chamber R6 and the inlet oil chamber R7 to each other. That is, the communication channel R11 guides hydraulic oil from the inlet oil chamber R7 to the upper hydraulic chamber R6 while bypassing the piston ring 6d. An outlet hole O penetrating the crosshead pin 7a in an axial direction of the crosshead pin 7a is formed on a side lower than the center of the crosshead pin 7a. The outlet hole O is an opening through which cooling oil having passed through a cooling flow channel (not shown) of the piston rod 6 is discharged. In addition, the crosshead pin 7a is provided with a supply flow channel R4 that connects the hydraulic chamber R3 and a plunger pump 8c to be described later to each other, and a relief flow channel R5 that connects the hydraulic chamber R3 and a relief valve 8f to be described later to each other.

The guide shoe 7b is a member that rotatably supports the crosshead pin 7a and moves, on a guide rail (not shown), in the stroke direction of the piston 4 in association with the crosshead pin 7a. The guide shoe 7b moves along the guide rail, so that the crosshead pin 7a is regulated with respect to movement other than a rotational motion and movement in a linear direction parallel to the stroke direction of the piston 4. The lid member 7c is an annular member which is fixed to an upper portion of the crosshead pin 7a and into which the end portion of the piston rod 6 is inserted. The orifice 7d is a discal member that has an opening in the center thereof and is provided inside the communication channel R11. A flow channel diameter of a portion of the communication channel R11 is reduced by the orifice 7d. The crosshead 7 transmits a linear motion of the piston 4 to the connecting rod 9.

As shown in Fig. 2, the hydraulic portion 8 includes a supply pump 8a, an oscillating pipe 8b, the plunger pump 8c, a first check valve 8d and a second check valve 8e included in the plunger pump 8c, and the relief valve 8f. In addition, the piston rod 6, the crosshead 7, the hydraulic portion 8, and the controller 300 function as a variable compression device in the present disclosure.

The supply pump 8a boosts hydraulic oil to be supplied from a hydraulic oil tank (not shown) and supplies the boosted hydraulic oil to the plunger pump 8c on the basis of an instruction given from the controller 300. The supply pump 8a is driven using, for example, power of a power generator of the ship and can be operated before a liquid fuel is supplied to the combustion chamber R1. In addition, a portion of a working fluid, which is pressure-fed from the supply pump 8a, passes through the inside of the crosshead pin 7a and is supplied to the inlet oil chamber R7. The oscillating pipe 8b is a pipe that connects the supply pump 8a and the plunger pump 8c of each cylinder to each other, and is slidable between the plunger pump 8c moving in association with the crosshead pin 7a and the fixed supply pump 8a.

The plunger pump 8c is fixed to the crosshead pin 7a and includes a rod-shaped plunger 8c1, a tubular cylinder 8c2 that slidably accommodates the plunger 8c1, and a plunger driving unit 8c3. The plunger pump 8c boosts hydraulic oil and supplies the boosted hydraulic oil to the hydraulic chamber R3 by the plunger 8c1 being driven by the plunger driving unit 8c3 and sliding inside the cylinder 8c2. In addition, the first check valve 8d is provided in an opening, on an ejection side of hydraulic oil, which is provided in an end portion of the cylinder 8c2, and the second check valve 8e is provided in an opening, on an injection side of hydraulic oil, which is provided on the side circumferential surface of the cylinder 8c2. The plunger driving unit 8c3 is connected to the plunger 8c1 and makes the plunger 8c1 reciprocate on the basis of an instruction given from the controller 300.

The first check valve 8d is configured to be closed by a valve body thereof being biased toward the inside of the cylinder 8c2, and prevents hydraulic oil supplied to the hydraulic chamber R3 from flowing backward to the cylinder 8c2. In addition, the first check valve 8d is opened by the valve body thereof being pressed by hydraulic oil when the pressure of the hydraulic oil in the cylinder 8c2 becomes equal to or higher than a biasing force (valve-opening pressure) of a biasing member of the first check valve 8d. The second check valve 8e is biased toward the outside of the cylinder 8c2 and prevents hydraulic oil supplied to the cylinder 8c2 from flowing backward to the supply pump 8a. In addition, the second check valve 8e is opened by a valve body thereof being pressed by hydraulic oil when the pressure of the hydraulic oil supplied from the supply pump 8a becomes equal to or higher than a biasing force (valve-opening pressure) of a biasing member of the second check valve 8e. Meanwhile, the valve-opening pressure of the first check valve 8d is higher than the valve-opening pressure of the second check valve 8e, and the first check valve 8d is not opened by the pressure of hydraulic oil supplied from the supply pump 8a during a normal operation in which an operation is performed at a preset compression ratio.

The relief valve 8f is provided in the crosshead pin 7a and includes a main body portion 8f1 and a relief valve driving unit 8f2. The main body portion 8f1 is a valve connected to the hydraulic chamber R3 and the hydraulic oil tank (not shown). The relief valve driving unit 8f2 is connected to a valve body of the main body portion 8f1 and opens and closes the main body portion 8f1 on the basis of an instruction given from the controller 300. The relief valve 8f is opened by the relief valve driving unit 8f2, so that hydraulic oil stored in the hydraulic chamber R3 is returned to the hydraulic oil tank.

As shown in Fig. 1, the connecting rod 9 is an elongate member which is coupled to the crosshead pin 7a and coupled to the crankshaft 11. The connecting rod 9 converts a linear motion of the piston 4 transmitted to the crosshead pin 7a into a rotational motion. The crank angle sensor 10 is a sensor for measuring a crank angle of the crankshaft 11 and transmits a crank pulse signal for calculating a crank angle to the controller 300.

The crankshaft 11 is an elongate member which is connected to the connecting rod 9 provided in the cylinder, and is rotated by rotational motions transmitted to each of the connecting rods 9 to transmit power to, for example, a screw or the like. The scavenging reservoir 12 is provided between the cylinder jacket 3c and the supercharger 200. Air pressurized by the supercharger 200 flows into the scavenging reservoir 12. In addition, the air cooler 14 is provided inside the scavenging reservoir 12. The exhaust reservoir 13 is a pipe-shaped member which is connected to the exhaust port H of each cylinder and connected to the supercharger 200. A gas discharged from the exhaust port H is temporarily stored in the exhaust reservoir 13 to suppress pulsation, and is then supplied to the supercharger 200. Thereafter, the air cooler 14 cools air inside the scavenging reservoir 12.

The supercharger 200 includes a turbine which is rotated by a gas discharged from the exhaust port H, pressurizes air suctioned from an intake port (not shown), and supplies the pressurized air to the combustion chamber R1.

The controller 300 is a computer that controls the amount of fuel to be supplied, and the like on the basis of, for example, an operation performed by an operator of the ship, or the like. In addition, the controller 300 changes a compression ratio in the combustion chamber R1 by controlling the hydraulic portion 8. Specifically, the controller 300 controls the plunger pump 8c, the supply pump 8a, and the relief valve 8f to adjust the amount of hydraulic oil in the hydraulic chamber R3, thereby changing the position of the piston rod 6 to change a compression ratio.

The engine system 100 makes the piston 4 slide inside the cylinder liner 3a to rotate the crankshaft 11 by igniting and exploding fuel injected into the combustion chamber R1 from the fuel injection valve (not shown). In detail, the fuel supplied to the combustion chamber R1 is mixed with air flowing in from the scavenging port S and is compressed due to the movement of the piston 4 in a direction of a top dead center, thereby increasing a temperature and causing spontaneous ignition. Further, in the case of a liquid fuel, the liquid fuel is vaporized due to a rise in temperature in the combustion chamber R1, thereby causing spontaneous ignition.

In addition, a fuel in the combustion chamber R1 is rapidly expanded by spontaneous ignition, and a pressure directed in a direction of a bottom dead center is applied to the piston 4. Thereby, the piston 4 moves in the direction of the bottom dead center, the piston rod 6 is moved in association with the piston 4, and the crankshaft 11 is rotated via the connecting rod 9. Further, the piston 4 is moved to the bottom dead center, so that pressurized air flows into the combustion chamber R1 from the scavenging port S. The exhaust port H is opened due to the exhaust valve unit 5 being driven, and exhaust gas in the combustion chamber R1 is pushed out to the exhaust reservoir 13 by pressurized air.

In a case where a compression ratio is increased, the controller 300 drives the supply pump 8a to supply hydraulic oil to the plunger pump 8c. In addition, the controller 300 drives the plunger pump 8c to pressurize hydraulic oil to a pressure capable of lifting the piston rod 6, and supplies the pressurized hydraulic oil to the hydraulic chamber R3. The end portion of the piston rod 6 is lifted by the pressure of the hydraulic oil in the hydraulic chamber R3, and accordingly, the position of the top dead center of the piston 4 is moved upward (to the exhaust port H side).

In a case where a compression ratio is decreased, the controller 300 drives the relief valve 8f to make the hydraulic chamber R3 and the hydraulic oil tank (not shown) communicate with each other. The load of the piston rod 6 is applied to the hydraulic oil in the hydraulic chamber R3, and the hydraulic oil in the hydraulic chamber R3 is pushed out to the hydraulic oil tank through the relief valve 8f. Thereby, the hydraulic oil in the hydraulic chamber R3 is reduced, the piston rod 6 is moved downward (to the crankshaft 11 side), thereby moving the position of the top dead center of the piston 4 downward.

In addition, a portion of hydraulic oil which is pressure-fed from the supply pump 8a is supplied to the inlet oil chamber R7. In addition, the hydraulic oil in the inlet oil chamber R7 flows to the outer flow channel R8 through the inlet flow channel R10 and is supplied to the inside of the piston 4. The hydraulic oil flowing into the piston 4 cools the piston 4 and is discharged from the outlet hole O through the inner flow channel R9. In addition, a portion of the hydraulic oil supplied to the inlet oil chamber R7 is supplied to the upper hydraulic chamber R6 through the communication channel R11. In this case, a pressure loss occurs in the hydraulic oil while the hydraulic oil passes through the orifice 7d. Thereby, the hydraulic oil in the communication channel R11 tends to flow in a fixed direction.

When the engine 1 is started, the piston rod 6 is moved upward in a state where a combustion pressure is not generated. In this case, hydraulic oil is supplied to the inside of the upper hydraulic chamber R6, so that the hydraulic oil in the upper hydraulic chamber R6 functions as a damper, thereby preventing the lid member 7c and the flange 6a from colliding with each other. In addition, the orifice 7d prevents the hydraulic oil supplied to the upper hydraulic chamber R6 from being pushed back to the inlet oil chamber R7 due to a pressure received from the flange 6a.

In addition, when the pressure of the hydraulic oil in the upper hydraulic chamber R6 is increased to a predetermined value or greater in association with the rising of the piston rod 6, the hydraulic oil is returned to the inlet oil chamber R7 through the communication channel R11.

According to the present embodiment, a portion of hydraulic oil supplied to the inlet oil chamber R7 can be stably supplied to the upper hydraulic chamber R6 by the communication channel R11. Therefore, collision energy between the lid member 7c and the flange 6a of the piston rod 6 is absorbed by hydraulic oil in the upper hydraulic chamber R6, and thus it is possible to prevent collision.

In addition, according to the present embodiment, since a flow rate in the communication channel R11 is limited by the orifice 7d, all hydraulic oil in the upper hydraulic chamber R6 is not returned to the inlet oil chamber R7 side from the communication channel R11, and thus it is possible to maintain a state where an appropriate amount of hydraulic oil is stored in the upper hydraulic chamber R6 at all times.

### [Second embodiment]

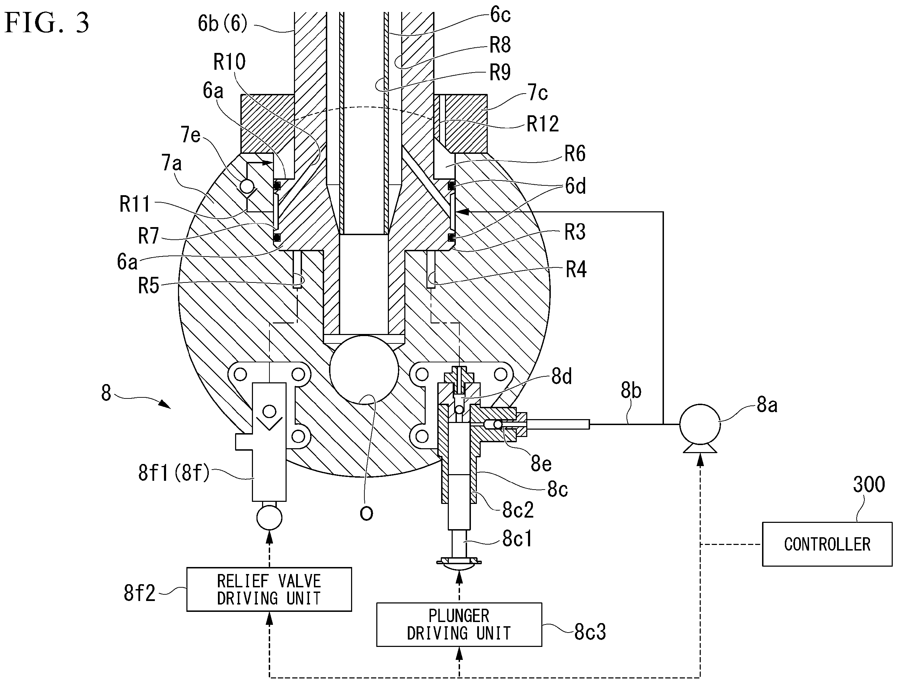

Next, a modification example of the first embodiment will be described as a second embodiment with reference to Fig. 3. Meanwhile, common constituent members are denoted by the same reference numerals and signs, and the description thereof will be omitted.

In the engine system 100 of the present embodiment, the crosshead 7 does not include the orifice 7d and includes a check valve 7e in the communication channel R11. The check valve 7e is provided with a direction from the inlet oil chamber R7 to the upper hydraulic chamber R6 as a forward direction, and prevents hydraulic oil from flowing backward in a direction from the upper hydraulic chamber R6 to the inlet oil chamber R7. In addition, an escape channel R12 connecting the upper hydraulic chamber R6 and the outside is formed in the lid member 7c.

In the present embodiment, a portion of hydraulic oil which is pressure-fed from the supply pump 8a is supplied to the upper hydraulic chamber R6 through the communication channel R11 from the inlet oil chamber R7. Thereby, since the hydraulic oil in the upper hydraulic chamber R6 functions as a damper, collision energy between the lid member 7c and the flange 6a is absorbed. Further, when the pressure of hydraulic oil in the upper hydraulic chamber R6 is increased, the hydraulic oil inside the upper hydraulic chamber R6 is discharged to the outside from the escape channel R12.

In addition, according to the present embodiment, the check valve 7e is provided in the communication channel R11, so that it is possible to set a direction in which hydraulic oil in the communication channel R11 flows to be one direction and to more smoothly supply hydraulic oil to the upper hydraulic chamber R6.

Further, according to the present embodiment, the escape channel R12 is provided, so that it is possible to discharge hydraulic oil from the escape channel R12 when the pressure of hydraulic oil in the upper hydraulic chamber R6 is increased.

While preferred embodiments of the present disclosure have been described with reference to the drawings, the present disclosure is not limited to the embodiments. Shapes, combinations, and the like of the constituent members described in the above-described embodiments are exemplary, and various modifications can be made on the basis of a request for design, and the like without departing from the scope of the present disclosure.

In the embodiment, the orifice 7d or the check valve 7e is provided as an adjustment unit, but the present disclosure is not limited thereto. As an adjustment unit, other members such as a throttle valve may be provided.

In addition, a valve device that adjusts the amount of hydraulic oil to be discharged may be provided in the escape channel R12 in the second embodiment.

### Industrial Applicability

The present disclosure can be applied to a variable compression device capable of changing a compression ratio in a combustion chamber of an engine, and an engine system including the variable compression device.

### Description of Reference Signs

1 Engine
2 Frame
3 Cylinder portion
3a Cylinder liner
3b Cylinder head
3c Cylinder jacket
4 Piston
5 Exhaust valve unit
5a Exhaust valve
5b Exhaust valve casing
5c Exhaust valve driving unit
6 Piston rod
6a Flange
6b Outer tube
6c Inner tube
6d Piston ring (sliding ring)
7 Crosshead
7a Crosshead pin (fluid chamber forming member)
7b Guide shoe
7c Lid member (regulation member)
7d Orifice (reduced diameter portion)
7e Check valve
8 Hydraulic portion
8a Supply pump
8b Oscillating pipe
8c Plunger pump
8c1 Plunger
8c2 Cylinder
8c3 Plunger driving unit
8d First check valve
8e Second check valve
8f Relief valve
8f1 Main body portion
8f2 Relief valve driving unit
9 Connecting rod
10 Crank angle sensor
11 Crankshaft
12 Scavenging reservoir
13 Exhaust reservoir
14 Air cooler
15 Upper hydraulic chamber hydraulic mechanism
100 Engine system
200 Supercharger
300 Controller
S Scavenging port
H Exhaust port
O Outlet hole
R1 Combustion chamber
R2 Scavenging chamber
R3 Hydraulic chamber (fluid chamber)
R4 Supply flow channel
R5 Relief flow channel
R6 Upper hydraulic chamber (upper space)
R7 Inlet oil chamber (lower space)
R8 Outer flow channel
R9 Inner flow channel
R10 Inlet flow channel
R11 Communication channel
R12 Escape channel

## Claims

1. A variable compression device (6, 7, 8, 300) that is configured to change a compression ratio in a combustion chamber (R1) of an engine (1), the variable compression device (6, 7, 8, 300) comprising:
a piston rod (6);
a fluid chamber forming member (7a) which forms a portion of a fluid chamber (R3), the fluid chamber being configured to move the piston rod (6) in a direction in which a compression ratio is increased by supplying a boosted working fluid thereto;
a regulation member (7c) which is configured to regulate movement of the piston rod (6) in a direction in which a compression ratio is increased; and
a sliding ring (6d) which is provided on a circumferential surface of the piston rod to be slidable with respect to the fluid chamber forming member (7a),
wherein
a pair of the sliding rings (6d, 6d) is provided at an interval in a vertical direction,
a lower space (R7) surrounded by the fluid chamber forming member (7a) and the piston rod (6) is formed between the pair of the sliding rings (6d), and
an upper space (R6) surrounded by the fluid chamber forming member (7a), the piston rod (6), and the regulation member (7c) is formed above the pair of sliding rings (6d, 6d),
**characterized in that**
the fluid chamber forming member (7a) includes a communication channel (R11) that connects the upper space (R6) and the lower space (R7) to each other and that is configured to guide a portion of the working fluid, which is supplied to the lower space (R7) as a coolant, from the lower space (R7) to the upper space (R6).

2. The variable compression device (6, 7, 8, 300) according to claim 1, further comprising an adjustment unit (7d, 7e) which is provided in the communication channel (R11) and is configured to adjust a flow of the working fluid in the communication channel (R11).

3. The variable compression device (6, 7, 8, 300) according to claim 2, wherein the adjustment unit (7d) is a reduced diameter portion that is configured to reduce a diameter of a portion of the communication channel (R11).

4. The variable compression device (6, 7, 8, 300) according to claim 2, wherein the adjustment unit (7e) is a check valve.

5. The variable compression device (6, 7, 8, 300) according to claim 4, wherein the fluid chamber forming member (7a) or the regulation member (7c) includes an escape channel that is configured to connect the upper space (R6) and an outside to each other.

6. An engine system (100) comprising the variable compression device (6, 7, 8, 300) according to any one of claims 1 to 5.

## Patentansprüche

1. Variable Kompressionsvorrichtung (6, 7, 8, 300), die gestaltet ist, um ein Kompressionsverhältnis in einer Brennkammer (R1) einer Maschine (1) zu ändern, wobei die variable Kompressionsvorrichtung (6, 7, 8, 300) Folgendes aufweist:
eine Kolbenstange (6);
ein fluidkammerausbildendes Bauteil (7a), das einen Abschnitt einer Fluidkammer (R3) ausbildet, wobei die Fluidkammer gestaltet ist, um die Kolbenstange (6) in eine Richtung, in der ein Kompressionsverhältnis erhöht wird, durch Zuführen eines verstärkten Arbeitsfluids zu dieser zu bewegen;
ein Regulationsbauteil (7c), das gestaltet ist, um eine Bewegung der Kolbenstange (6) in einer Richtung zu regulieren, in der ein Kompressionsverhältnis erhöht wird; und
einen Gleitring (6d), der an einer Umfangsfläche der Kolbenstange vorgesehen ist, um mit Bezug zu dem fluidkammerausbildenden Bauteil (7a) gleiten zu können, wobei
ein Paar der Gleitringe (6d, 6d) in einem Abstand in einer vertikalen Richtung vorgesehen ist,
ein unterer Raum (R7), der von dem fluidkammerausbildenden Bauteil (7a) und der Kolbenstange (6) umgeben ist, zwischen dem Paar der Gleitringe (6d) ausgebildet ist, und
ein oberer Raum (R6), der von dem fluidkammerausbildenden Bauteil (7a), der Kolbenstange (6) und dem Regulationsbauteil (7c) umgeben ist, oberhalb des Paars der Gleitringe (6d, 6d) ausgebildet ist,
**dadurch gekennzeichnet, dass**
das fluidkammerausbildende Bauteil (7a) einen Verbindungskanal (R11) umfasst, der den oberen Raum (R6) und den unteren Raum (R7) miteinander verbindet und der gestaltet ist, um einen Teil des Arbeitsfluids, das zu dem unteren Raum (R7) als ein Kühlmittel zugeführt wird, von dem unteren Raum (R7) zu dem oberen Raum (R6) zu führen.

2. Variable Kompressionsvorrichtung (6, 7, 8, 300) nach Anspruch 1, des Weiteren mit einer Einstellungseinheit (7d, 7e), die in dem Verbindungskanal (R11) vorgesehen ist und gestaltet ist, um eine Strömung des Arbeitsfluids in dem Verbindungskanal (R11) einzustellen.

3. Variable Kompressionsvorrichtung (6, 7, 8, 300) nach Anspruch 2, wobei die Einstellungseinheit (7d) ein Abschnitt mit verringertem Durchmesser ist, der gestaltet ist, um einen Durchmesser eines Abschnitts des Verbindungskanals (R11) zu verringern.

4. Variable Kompressionsvorrichtung (6, 7, 8, 300) nach Anspruch 2, wobei die Einstellungseinheit (7e) ein Rückschlagventil ist.

5. Variable Kompressionsvorrichtung (6, 7, 8, 300) nach Anspruch 4, wobei das fluidkammerausbildende Bauteil (7a) oder das Regulationsbauteil (7c) einen Entweichkanal hat, der gestaltet ist, um den oberen Raum (R6) und eine Außenseite miteinander zu verbinden.

6. Maschinensystem (100) mit der variablen Kompressionsvorrichtung (6, 7, 8, 300) nach einem der Ansprüche 1 bis 5.

## Revendications

1. Dispositif de compression variable (6, 7, 8, 300) configuré pour changer un taux de compression dans une chambre de combustion (R1) d'un moteur (1), le dispositif de compression variable (6, 7, 8, 300) comprenant :
une tige de piston (6) ;
un élément de formation de chambre de fluide (7a) qui forme une partie d'une chambre de fluide (R3), la chambre de fluide étant configurée pour déplacer la tige de piston (6) dans une direction dans laquelle un taux de compression est augmenté en fournissant un fluide de travail majoré à celle-ci ;
un élément de régulation (7c) configuré pour régler le mouvement de la tige de piston (6) dans une direction dans laquelle un taux de compression est augmenté ; et
un anneau coulissant (6d) qui est prévu sur une surface circonférentielle de la tige de piston pour être coulissant par rapport à l'élément de formation de chambre de fluide (7a),
dans lequel
une paire des anneaux coulissants (6d, 6d) est prévue à un intervalle dans une direction verticale,
un espace inférieur (R7) entouré par l'élément de formation de chambre de fluide (7a) et la tige de piston (6) est formé entre la paire des anneaux coulissants (6d), et
un espace supérieur (R6) entouré par l'élément de formation de chambre de fluide (7a), la tige de piston (6) et l'élément de régulation (7c) est formé au-dessus de la paire des anneaux coulissants (6d, 6d),
**caractérisé en ce que**
l'élément de formation de chambre de fluide (7a) comprend un canal de communication (R11) qui relie l'espace supérieur (R6) et l'espace inférieur (R7) l'un à l'autre et qui est configuré pour guider une partie du fluide de travail, qui est fourni à l'espace inférieur (R7) en tant que liquide de refroidissement, de l'espace inférieur (R7) à l'espace supérieur (R6).

2. Dispositif de compression variable (6, 7, 8, 300) selon la revendication 1, comprenant en outre une unité d'ajustement (7d, 7e) prévue dans le canal de communication (R11) et configurée pour ajuster un écoulement du fluide de travail dans le canal de communication (R11).

3. Dispositif de compression variable (6, 7, 8, 300) selon la revendication 2, dans lequel l'unité d'ajustement (7d) est une partie à diamètre réduit qui est configurée pour réduire un diamètre d'une partie du canal de communication (R11).

4. Dispositif de compression variable (6, 7, 8, 300) selon la revendication 2, dans lequel l'unité d'ajustement (7e) est un clapet anti-retour.

5. Dispositif de compression variable (6, 7, 8, 300) selon la revendication 4, dans lequel l'élément de formation de chambre de fluide (7a) ou l'élément de régulation (7c) comprend un canal d'évacuation configuré pour relier l'espace supérieur (R6) et un extérieur l'un à l'autre.

6. Système moteur (100) comprenant le dispositif de compression variable (6, 7, 8, 300) selon l'une quelconque des revendications 1 à 5.
